(19) Europäisches Patentamt
European Patent Office
Office européen des brevets

(11) **EP 3 498 613 B1**

(12) **FASCICULE DE BREVET EUROPEEN**

(45) Date de publication et mention
de la délivrance du brevet:
**08.07.2020 Bulletin 2020/28**

(51) Int Cl.:
***B64F 5/60*** *(2017.01)* ***B64D 37/20*** *(2006.01)*

(21) Numéro de dépôt: **18210629.4**

(22) Date de dépôt: **06.12.2018**

(54) **OUTIL ET PROCEDE DE PURGE D'EAU D'UN RESERVOIR DE CARBURANT**

WERKZEUG UND VERFAHREN ZUM WASSERABLASSEN AUS EINEM KRAFTSTOFFTANK

TOOL AND METHOD FOR PURGING WATER FROM A FUEL TANK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.12.2017 FR 1771382**

(43) Date de publication de la demande:
**19.06.2019 Bulletin 2019/25**

(73) Titulaire: **Airbus Helicopters**
**13725 Marignane Cedex (FR)**

(72) Inventeurs:
• **Chuc, Charles**
**13320 Bouc-Bel-Air (FR)**
• **Paquin, Raphaël**
**13740 Le Rove (FR)**
• **Rabemarolahi, Riantsoa**
**13090 Aix-en-Provence (FR)**
• **Colmas, Jean Philippe**
**13480 Cabriès (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**WO-A1-2008/110838    WO-A1-2013/056626**
**FR-A1- 2 800 872    US-A1- 2011 084 842**
**US-A1- 2012 210 769    US-B1- 7 377 151**

**Description**

La présente invention concerne un outil et un procédé de purge pour extraire l'eau d'un réservoir de carburant, en particulier d'un réservoir de carburant d'un aéronef.

Un réservoir de carburant d'un aéronef peut parfois contenir non seulement du carburant mais aussi de l'eau. Par exemple, la condensation de vapeur d'eau à la suite d'un refroidissement après un vol peut induire la présence d'eau dans le réservoir. Cette eau éventuelle est susceptible de provoquer un dysfonctionnement d'un moteur alimenté en carburant par ce réservoir.

Il est connu que l'eau ne se mélange pas dans le carburant et se dépose donc au fond du réservoir en raison de sa densité. Dès lors, le fond du réservoir peut comprendre un puisard débouchant sur une valve de purge. Pour chaque réservoir, un opérateur peut manœuvrer avant vol la valve de purge de ce réservoir afin d'extraire l'eau contenue éventuellement dans ce réservoir.

Par exemple, la valve de purge comporte un clapet mobile entre une position fermée et une position ouverte. L'opérateur peut ouvrir la valve de purge et utiliser un outil de purge pour purger l'eau du réservoir.

Un tel outil de purge peut comporter un tube transparent pour les ondes électromagnétiques présentes dans la gamme des fréquences (lumières et couleurs) visibles par un homme. Un opérateur ouvre alors la valve de purge. Le liquide contenu dans le réservoir s'écoule par conséquent par gravité dans le tube transparent. L'eau et le carburant ayant des couleurs différentes, l'opérateur peut identifier visuellement la nature du liquide purgé en observant la couleur de ce liquide. Tant que de l'eau s'écoule dans le tube, l'opérateur maintient donc en position l'outil de purge. Par contre, lorsque l'opérateur constate visuellement que le liquide coulant du réservoir est du carburant, alors cet opérateur retire l'outil de purge et ferme la valve de purge.

Une telle opération peut s'avérer délicate lorsque les valves de purge sont difficilement accessibles. De plus, la détection visuelle d'eau peut être délicate.

Le document FR 2929704 qui décrit un capteur capacitif n'appartient au domaine technique de l'invention.

Les documents US 7377151, US 2012/210769, US 2011/084842, WO 2013/056626, FR 2800872 et WO 2008/110838 sont aussi connus et éloignés de l'invention.

La présente invention a alors pour objet de proposer un outil de purge innovant pour purger un réservoir de carburant, notamment le réservoir de carburant d'un aéronef.

Selon l'invention, un outil de purge est destiné à extraire l'eau d'un réservoir de carburant, cet outil de purge présentant un tube délimitant un espace interne.

Le tube comprend au moins un capteur capacitif, cet outil de purge comprenant un calculateur relié à cet au moins un capteur capacitif et à au moins un générateur d'alerte. Cet au moins un capteur capacitif est configuré pour transmettre un signal de mesure au calculateur, le calculateur étant configuré pour déterminer à l'aide du signal de mesure si un liquide s'écoulant du réservoir vers ledit espace interne est du carburant, ledit calculateur étant configuré pour transmettre un signal d'alerte au générateur d'alerte au moins quand ledit liquide est du carburant, ledit générateur d'alerte étant configuré pour générer une alerte sur ordre du calculateur quand ledit liquide est du carburant.

Ainsi, pour purger l'eau d'un réservoir un opérateur ouvre une valve de purge du réservoir pour qu'un liquide contenu dans le réservoir s'écoule dans le tube.

L'outil de purge est de plus muni d'au moins un capteur capacitif. Ce capteur capacitif comprend usuellement un condensateur. Ce condensateur émet un champ magnétique perturbé par le liquide s'écoulant du réservoir et pénétrant dans le tube. La capacité électrique du condensateur et par suite le signal de mesure émis par le capteur capacitif varient notamment en fonction de la nature et/ou de la hauteur du liquide traversant ce champ magnétique. En particulier, la nature du liquide peut être de l'eau, un mélange d'eau et de carburant ou du carburant. En fonction du signal de mesure reçu, le calculateur peut ainsi déterminer si le liquide qui s'échappe du réservoir est du carburant. Dans l'affirmative, le calculateur envoie un signal d'alerte au générateur d'alerte pour signaler que le liquide est du carburant. L'opérateur peut alors arrêter la purge.

Le générateur d'alerte peut comporter au moins un moyen sonore ou visuel. Par exemple, Le générateur d'alerte allume une première lampe et/ou génère un premier son lorsque le calculateur détecte que le liquide pénétrant dans le tube est du carburant. Eventuellement, le générateur d'alerte allume une deuxième lampe et/ou génère un deuxième son tant que le calculateur ne détecte pas que le liquide pénétrant dans le tube est du carburant.

Selon un exemple, une lampe rouge est allumée par défaut au début de la purge. Si le réservoir contient de l'eau, le calculateur détecte dans un premier temps que le liquide s'écoulant du réservoir n'est pas du carburant. La lampe rouge reste alors allumée. Lorsque toute l'eau a été purgée, le calculateur détecte dans un deuxième temps que le liquide qui s'écoule du réservoir est du carburant. Le calculateur transmet alors un message au générateur d'alerte qui éteint la lampe rouge et allume une lampe verte par exemple. Cet outil permet donc de déterminer quand l'eau a été purgée et peut limiter la perte de carburant.

L'outil de purge peut de plus comprendre une ou plusieurs des caractéristiques qui suivent.

Selon une première réalisation, ledit au moins un capteur capacitif peut inclure un capteur capacitif, dénommé « capteur capacitif circonférentiel » par commodité, qui s'étend circonférentiellement soit sur une face du tube soit au sein d'une paroi latérale du tube.

Un tel capteur capacitif circonférentiel peut s'étendre selon toute la circonférence d'un tronçon du tube, ou uniquement sur une partie de cette circonférence.

Par exemple, lorsque le tube présente des sections circulaires, le capteur capacitif circonférentiel peut s'étendre le long d'un arc de cercle.

Cet arc de cercle peut s'étendre selon un angle compris entre 0 degré exclu et 360 degrés inclus.

Selon une deuxième réalisation le tube s'étend selon une direction longitudinale d'un fond vers un sommet, au moins un capteur capacitif incluant un capteur, dénommé « capteur capacitif longitudinal » par commodité, qui s'étend parallèlement à la direction longitudinale.

Une telle direction longitudinale peut être un axe de révolution du tube par exemple.

En outre, le fond peut être ouvert sur l'extérieur ou peut être fermé par une paroi de fond fermant l'espace interne selon un sens longitudinal.

Selon une troisième réalisation, le tube peut comprendre au moins un capteur capacitif circonférentiel et au moins un capteur capacitif longitudinal.

Indépendamment de la réalisation, ledit au moins un capteur capacitif peut inclure au moins deux électrodes de mesure d'un condensateur, les deux électrodes de mesure étant disposées sur une même facette d'un ruban.

Sur une autre facette, le capteur capacitif peut comprendre une troisième électrode.

Par exemple, au moins un capteur capacitif est du type d'écrit dans le document FR 2929704.

Selon un autre aspect et indépendamment de la réalisation, ledit outil de purge peut comporter un doigt saillant en dehors d'un sommet du tube.

Un tel doigt peut permettre d'ouvrir une valve de purge.

Selon un autre aspect et indépendamment de la réalisation, le tube pouvant comprendre une paroi latérale s'étendant selon une direction longitudinale d'un fond vers un sommet, la paroi latérale peut comporter une ouverture de mise à l'air qui relie l'espace interne à un milieu extérieur situé à l'extérieur du tube.

Dès lors, le sommet du tube peut comprendre un joint d'étanchéité à accoler à un fuselage d'un aéronef lors d'une opération de purge.

Selon un autre aspect et indépendamment de la réalisation, ledit tube pouvant s'étendre selon une direction longitudinale d'un fond vers un sommet, ledit fond peut être fermé par une paroi de fond délimitant longitudinalement l'espace interne.

Le tube forme alors un récipient dans lequel s'écoule le liquide purgé.

Selon un autre aspect et indépendamment de la réalisation, ledit tube pouvant s'étendre selon une direction longitudinale d'un fond vers un sommet, ledit fond comporte un raccord ou ledit sommet comporte un raccord ou ledit fond et ledit sommet comportent un raccord.

Le terme « raccord » désigne un organe pouvant être connecté à un autre organe, par exemple à un autre raccord ou à un tuyau.

Outre un outil de purge, l'invention vise un procédé pour extraire l'eau présente au fond d'un réservoir de carburant avec cet outil de purge, le réservoir comportant une valve de purge.

Le procédé comporte les étapes suivantes :

- ouverture de la valve de purge,

- écoulement dans le tube dudit liquide sortant de la valve de purge, le liquide étant d'une nature qui peut être de l'eau ou un mélange d'eau et de carburant ou du carburant,

- détermination que la nature dudit liquide est du carburant avec ledit calculateur en exploitant ledit signal de mesure dudit au moins un capteur capacitif, et le cas échéant détermination que le liquide est du carburant,

- génération avec le générateur d'alerte d'une alerte indiquant que ledit liquide est du carburant lorsque ladite étape de détermination indique que ledit liquide est du carburant.

Eventuellement, le procédé peut comporter une étape de génération avec le générateur d'alerte d'une alerte indiquant que ledit liquide n'est pas du carburant lorsqu'une étape de détermination de la nature du liquide indique que ledit liquide n'est pas du carburant

L'expression « valve de purge » désigne un organe pouvant être fermé ou ouvert pour purger le réservoir. Cette expression « valve de purge » désigne alors une valve en tant que telle, un robinet, un clapet...

Ce procédé peut comporter une ou plusieurs des caractéristiques qui suivent.

Selon un aspect, le procédé peut comporter une étape de génération d'une alerte indiquant que ledit liquide n'est pas du carburant lorsqu'une étape de détermination de la nature du liquide permet d'indiquer que ledit liquide n'est pas du carburant.

Selon un autre aspect, selon le premier mode de réalisation et à partir d'un débit prédéterminé du liquide qui pénètre dans le tube, la zone couverte par le champ magnétique émis par le capteur capacitif circonférentiel peut être remplie par ce liquide. La capacité électrique du capteur capacitif circonférentiel est alors proportionnelle à la permittivité diélectrique relative du liquide. Le signal de mesure émis par le capteur capacitif est donc aussi l'image de la permittivité diélectrique du liquide. La permittivité diélectrique du carburant étant très différente de la permittivité diélectrique de l'eau, le signal de mesure permet au calculateur de déterminer aisément si le liquide est du carburant.

Par exemple, l'étape de détermination que la nature dudit liquide est du carburant peut comporter les étapes suivantes :

- mesure d'au moins une intensité électrique ou tension électrique d'un courant électrique transmis par ledit au moins un capteur capacitif au calculateur, ladite au moins une intensité électrique ou tension électrique variant en fonction d'une capacité électrique dudit au moins un capteur capacitif, ladite capacité électrique variant en fonction de la nature dudit liquide,

- détermination que ladite au moins une intensité électrique ou tension électrique est incluse dans au moins une plage de référence électrique mémorisée pour déterminer que ledit liquide est du carburant ou transformation de ladite au moins une intensité électrique ou tension électrique en une permittivité diélectrique calculée par le calculateur et détermination que ladite permittivité diélectrique calculée est incluse dans au moins une plage de permittivité diélectrique mémorisée pour déterminer que ledit liquide est du carburant.

Selon cette première alternative, le signal de mesure prend la forme d'un courant électrique dont l'intensité électrique ou la tension électrique varie en fonction de la capacité électrique du capteur capacitif.

Selon une deuxième alternative éventuellement combinable avec la première alternative, l'étape de détermination que la nature dudit liquide est du carburant peut comporter les étapes suivantes :

- mesure d'une capacité électrique du capteur capacitif, ladite capacité électrique variant en fonction de la nature dudit liquide,

- détermination que ladite capacité électrique est incluse dans au moins une plage de capacité électrique mémorisée pour déterminer que ledit liquide est du carburant ou transformation de ladite capacité électrique en une permittivité diélectrique calculée par le calculateur et détermination que ladite permittivité diélectrique calculée est incluse dans au moins une plage de permittivité diélectrique mémorisée pour déterminer que ledit liquide est du carburant.

Selon la deuxième alternative, le capteur capacitif comprend un capacimètre. Le signal de mesure peut alors prendre la forme d'un signal analogique ou numérique qui est porteur de la mesure de capacité.

Avec un outil selon le deuxième mode de réalisation, l'étape de détermination que la nature du liquide est du carburant peut comporter les étapes suivantes :

- détermination par ledit calculateur d'une évolution du signal de mesure émis par ledit au moins un capteur capacitif,

- détermination que le liquide est du carburant lorsque ladite évolution est incluse dans une première plage d'évolution mémorisée.

Les permittivités diélectriques de l'eau et du carburant étant très différentes, le signal de mesure évolue différemment lorsque le liquide est de l'eau ou du carburant. Le calculateur peut alors comparer cette évolution à des évolutions mémorisées pour déterminer la nature du liquide. Par exemple, ces évolutions mémorisées peuvent être établies par essais, un opérateur mémorisant l'évolution du signal de mesure lorsque du carburant s'écoule de la valve de purge de purge voire l'évolution du signal de mesure lorsque de l'eau s'écoule de la valve.

Selon un aspect, l'évolution du signal de mesure émis par ledit au moins un capteur capacitif peut être déterminée par le calculateur :

- soit en déterminant une variation de la capacité électrique dudit au moins un capteur capacitif durant une durée mémorisée, ladite première plage d'évolution mémorisée étant une plage de variation de capacité électrique,

- soit en déterminant une variation de l'intensité électrique ou de la tension électrique d'un courant électrique à une sortie dudit au moins un capteur capacitif, ladite première plage d'évolution mémorisée étant une plage de variation de référence.

Selon un autre aspect, lorsque ledit au moins un capteur capacitif comprend un capteur capacitif circonférentiel et un capteur capacitif longitudinal, l'étape de détermination que la nature dudit liquide est du carburant peut comporter les étapes suivantes :

- détermination que la nature dudit liquide est du carburant par le calculateur avec le signal de mesure émis par le capteur capacitif circonférentiel,

- détermination que la nature dudit liquide est du carburant par le calculateur avec le signal de mesure émis par le capteur capacitif longitudinal,

- détermination par le calculateur que ledit liquide est du carburant lorsqu'en même temps ledit calculateur détermine que le ledit liquide est du carburant en utilisant le signal de mesure émis par le capteur capacitif circonférentiel et ledit calculateur détermine que le ledit liquide est du carburant en utilisant le signal de mesure émis par le capteur capacitif longitudinal.

L'invention et ses avantages apparaîtront avec plus de détails dans le cadre de la description qui suit avec des exemples donnés à titre illustratif en référence aux figures annexées qui représentent :

- la figure 1, un schéma illustrant un outil de purge muni d'un capteur capacitif circonférentiel,

- la figure 2, un schéma illustrant un outil de purge muni d'un capteur capacitif longitudinal,

- les figures 3 à 6, des schémas illustrant le fonctionnement de l'outil de purge de la figure 2,

- la figure 7, un schéma illustrant un outil de purge muni d'un capteur capacitif longitudinal et d'un capteur capacitif circonférentiel, et

- la figure 8, un schéma illustrant un outil de purge muni d'au moins un raccord.

Les éléments présents dans plusieurs figures distinctes sont affectés d'une seule et même référence.

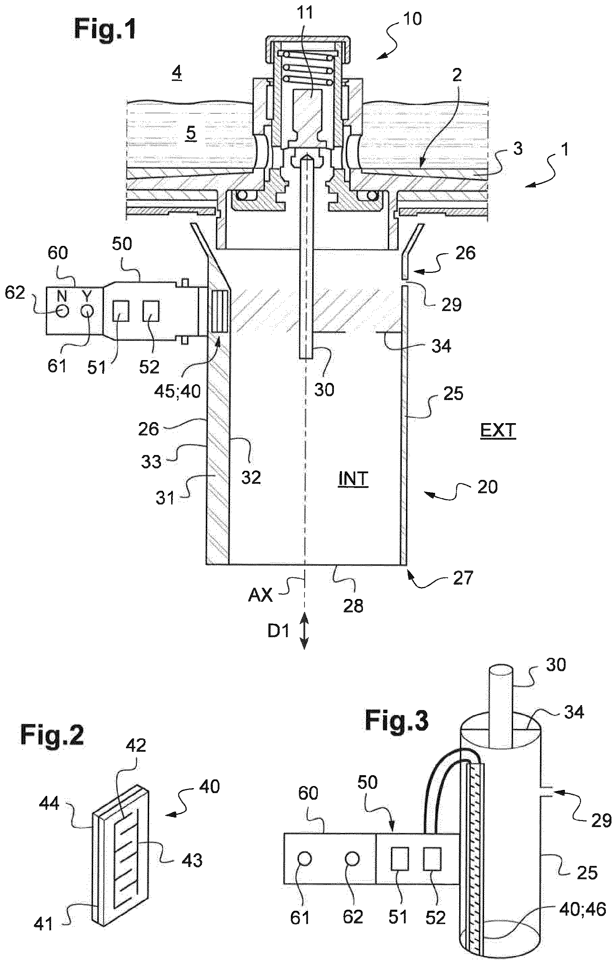

La figure 1 présente un réservoir 1 de carburant, par exemple un réservoir d'un aéronef. Ce réservoir comporte un point bas 2 muni d'une cloison de fond 3. Le réservoir 1 contient du carburant 4. En outre, le réservoir 1 peut contenir de l'eau 5 suite à un phénomène de condensation. De l'eau 5 est alors positionnée entre la cloison de fond 3 et le carburant 4.
Pour permettre à un opérateur d'extraire l'eau, le réservoir comporte une valve de purge 10. Une telle valve de purge 10 est munie d'un bouchon 11 qui est mobile entre une position ouverte représentée sur la figure 1 et une position fermée non représentée. Lorsque le bouchon 11 est dans la position ouverte, le liquide contenu dans le réservoir 1 s'échappe de ce réservoir 1 au travers de la valve de purge 10. A l'inverse, lorsque le bouchon 11 est dans la position fermée, le liquide contenu dans le réservoir 1 ne peut pas s'échapper de ce réservoir 1 au travers de la valve de purge 10.
Pour purger le réservoir de l'eau éventuellement contenue dans ce réservoir, un outil de purge 20 selon l'invention peut être utilisé.
La figure 1 illustre une première réalisation de cet outil de purge 20.
Quelle que soit sa réalisation, l'outil de purge 20 inclut un tube 25. Ce tube 25 sépare un espace interne INT de l'outil de purge 20 d'un milieu extérieur EXT situé à l'extérieur de l'outil de purge 20. Le tube 25 présente ainsi une paroi latérale 31 qui s'étend longitudinalement parallèlement à une direction longitudinale D1 et circonférentiellement le long d'une ligne fermée autour de cette direction longitudinale D1. Une telle direction longitudinale peut être disposée selon un axe de révolution AX du tube.
La paroi latérale 31 s'étend en outre selon son épaisseur d'une face dite « face interne 32 » en regard de l'espace interne INT jusqu'à une face dite « face externe » 33 en regard du milieu extérieur EXT.
La paroi latérale 31 s'étend en particulier longitudinalement le long de la direction longitudinale D1 d'un fond 27 vers un sommet 26. Les termes « fond » et « sommet » désignent alors deux tronçons extrémaux de la paroi latérale 31. Par exemple, la paroi latérale a la forme d'un cylindre à base circulaire.
Le sommet 26 est ouvert sur le milieu extérieur pour permettre à un liquide extrait du réservoir de pénétrer dans le tube 25 et de couler du sommet vers le fond par gravité. Le fond 27 peut aussi être ouvert pour que le tube forme une conduite. Alternativement, le fond 27 peut être fermé par une paroi de fond 28 pour que le tube représente un récipient.

Eventuellement, la paroi latérale 31 comprend une ouverture formant une ouverture de mise à l'air 29 qui relie l'espace interne INT au milieu extérieur EXT.

Par ailleurs, l'outil de purge 20 peut comporter un doigt 30 saillant du sommet 26 du tube 25 vers le milieu extérieur. Par exemple, le doigt 30 peut être fixé au tube par un ou plusieurs bras 34. Le doigt 30 peut aussi s'étendre dans le tube. Eventuellement, le doigt 30 peut s'étendre le long de la direction longitudinale D1. Dès lors, un tel doigt 30 peut exercer une pression sur le bouchon mobile 11 d'une valve de purge pour ouvrir la valve de purge.

Notamment lorsque le tube présente une ouverture de mise à l'air libre, le sommet 26 du tube peut être équipé d'un joint destiné à être plaqué contre un véhicule durant une opération de purge. Dans la négative, un espace peut séparer le sommet d'une paroi du véhicule conformément à la représentation de la figure 1.

Eventuellement, le tube est transparent au moins pour les ondes électromagnétiques présentes dans la gamme des fréquences visibles par un homme

Selon un autre aspect, let tube 25 porte au moins un capteur capacitif 40.

En référence à la figure 2, au moins un capteur capacitif voire tous les capteurs capacitifs sont des capteurs capacitifs à ruban. Un tel capteur capacitif à ruban inclut un ruban 41 qui s'étend selon son épaisseur d'une première facette jusqu'à une deuxième facette. Au moins deux électrodes de mesure 42, 43 d'un condensateur sont disposées sur une même première facette d'un ruban 41. Les deux électrodes de mesure peuvent être des électrodes à peigne.

Une troisième électrode 44 peut être située sur une deuxième facette du ruban.

En outre, le capteur capacitif peut comprendre une unité de traitement non représentée reliée aux électrodes. L'unité de traitement peut comprendre par exemple au moins un processeur, au moins une mémoire, au moins un circuit intégré, au moins un système programmable, au moins un circuit logique, ces exemples ne limitant pas la portée donnée à l'expression « unité de traitement ». L'unité de traitement peut comprendre une entrée d'alimentation électrique et une sortie apte à transmettre un signal de mesure.

En référence à la figure 1, au moins un capteur capacitif 40 peut être noyé dans la paroi latérale 31 par exemple. Selon un autre exemple, au moins un capteur capacitif 40 peut être collé sur la face interne 32 voire sur la face externe 33. Le cas échéant, deux électrodes de mesure 42, 43 d'un condensateur du capteur capacitif sont en regard de l'espace interne INT.

Selon un autre aspect, l'outil de purge 20 inclut un calculateur 50 relié à chaque capteur capacitif 40 pour recevoir un signal de mesure provenant de la sortie de chaque capteur capacitif 40, voire pour alimenter électriquement chaque entrée d'un capteur capacitif 40.

Le calculateur 50 peut comprendre par exemple au moins un processeur 51, au moins une mémoire 52, au moins un circuit intégré, au moins un système programmable, au moins un circuit logique, ces exemples ne limitant pas la portée donnée à l'expression « calculateur ».

Le calculateur 50 peut être solidarisé au tube 25 par exemple ou peut être déporté par rapport au tube 25.

Selon un autre aspect, l'outil de purge 20 inclut au moins un générateur d'alerte 60 relié au calculateur 50. Un tel générateur d'alerte peut comprendre au moins une première lampe 61 indiquant que le liquide purgé contient uniquement du carburant, voire une deuxième lampe 62 indiquant que le liquide purgé n'inclut pas que du carburant. Alternativement ou de manière complémentaire, le générateur d'alerte peut comprendre une enceinte ou équivalent pour générer des alertes sonores.

Pour purger l'eau d'un réservoir, l'outil de purge est positionné sous la valve de purge et la valve de purge est ouverte. Par exemple, un opérateur ouvre la valve de purge en enfonçant le doigt 30 dans la valve de purge 10. Le liquide contenu dans le réservoir s'écoule alors dans le tube 25.

Chaque capteur capacitif 40 émet un signal de mesure qui varie en fonction au moins de la nature du liquide, cette nature pouvant être de l'eau ou un mélange d'eau et de carburant ou du carburant.

Le calculateur 50 reçoit ces signaux de mesure et les exploite pour déterminer si le liquide est du carburant, voire pour déterminer la nature précise du liquide. A minima, le calculateur 50 est configuré pour déterminer à l'aide de chaque signal de mesure si un liquide s'écoulant du réservoir 1 est du carburant.

De plus, le calculateur 50 est configuré pour transmettre un signal d'alerte au générateur d'alerte 60 au moins quand le liquide est du carburant. Dans l'affirmative, le générateur d'alerte 60 est configuré pour générer une alerte particulière sur ordre du calculateur 50 quand ledit liquide est du carburant. Selon l'exemple de la figure 1, la première lampe est allumée en présence d'un liquide de type carburant, et la deuxième lampe est allumée dans les autres cas.

Selon la première réalisation de la figure 1, l'outil de purge comporte un capteur capacitif 40 de type capteur capacitif circonférentiel 45. Un tel capteur capacitif circonférentiel 45 s'étend circonférentiellement selon sa longueur, à savoir selon sa dimension la plus longue, soit sur une face interne 32 ou externe 33 du tube 25 soit au sein d'une paroi latérale 31 du tube 25.

Sur un tube circulaire à base cylindrique, le capteur capacitif circonférentiel 45 s'étend alors de fait le long d'un arc de cercle.

En particulier, le capteur capacitif circonférentiel 45 peut être agencé au niveau du sommet du tube, notamment dans le cas d'un tube formant un récipient.

Lorsque le liquide s'écoule du réservoir avec un débit stable et supérieur à un seuil prédéterminé, le liquide remplit entièrement la zone dans laquelle le capteur capacitif émet un champ magnétique, à savoir la zone hachurée sur la figure 1.

Dès lors, la capacité électrique du capteur capacitif circonférentiel 45 dépend de la permittivité diélectrique du liquide, et donc de la nature du liquide. Cette capacité électrique doit être sensiblement égale à une première valeur lorsque le liquide est de l'eau, et doit être sensiblement égale à une deuxième valeur lorsque le liquide est du carburant.

Selon une variante, le capteur capacitif émet un signal de mesure présentant une intensité électrique et/ou une tension électrique qui varie en fonction de cette capacité électrique.

Dès lors, le calculateur mesure cette intensité électrique ou cette tension électrique et la compare à au moins une plage de référence mémorisée pour au moins déterminer si le liquide est du carburant voire pour déterminer la nature du liquide. Le terme plage utilisé ici et par la suite peut désigner une unique valeur pouvant représenter une valeur au-delà de laquelle ou en dessus de laquelle le paramètre concerné doit se trouver pour valider la condition, ou peut représenter une plage bornée par deux valeurs dans laquelle le paramètre concerné doit se trouver pour valider la condition.

Par exemple, des essais peuvent permettre d'établir que lorsque le liquide est du carburant l'intensité électrique doit être comprise entre une première valeur d'intensité électrique et une deuxième valeur d'intensité électrique et que lorsque le liquide est de l'eau l'intensité électrique doit être comprise entre une troisième valeur d'intensité électrique et une quatrième valeur d'intensité électrique.

Alternativement, la calculateur peut transformer la valeur de l'intensité électrique ou de la tension électrique en une permittivité diélectrique calculée en appliquant un modèle mathématique de conversion mémorisé, et peut comparer cette permittivité diélectrique calculée à au moins une plage de permittivité diélectrique mémorisée pour au moins déterminer si ledit liquide est du carburant, voire pour déterminer la nature du liquide.

Lorsque la permittivité diélectrique calculée est incluse dans une première plage de permittivité diélectrique mémorisée, le liquide est du carburant. Eventuellement, lorsque la permittivité diélectrique calculée est incluse dans une deuxième plage de permittivité diélectrique mémorisée, le liquide est de l'eau.

Selon une variante, le capteur capacitif émet un signal de mesure porteur d'une capacité électrique du capteur capacitif 40, par exemple sous la forme d'un signal numérique.

Dès lors, le calculateur compare cette capacité électrique à au moins une plage de capacité électrique mémorisée pour au moins déterminer si ledit liquide est du carburant, voire pour déterminer la nature du liquide.

Alternativement, le calculateur peut transformer la capacité électrique en une permittivité diélectrique en appliquant un modèle mathématique de conversion mémorisé, et peut comparer cette permittivité diélectrique calculée à au moins une plage de permittivité diélectrique mémorisée pour au moins déterminer si ledit liquide est du carburant, voire pour déterminer la nature du liquide.

Selon la deuxième réalisation de la figure 3, un capteur capacitif 40 est du type capteur capacitif longitudinal 46. Un tel capteur capacitif longitudinal 46 s'étend parallèlement à la direction longitudinale D1 selon sa longueur, à savoir selon sa dimension la plus grande. Le capteur capacitif longitudinal 46 s'étend jusqu'au fond du tube. Un tel tube peut former un récipient en ayant le fond obturé par une paroi de fond.

Dès lors, le calculateur peut déterminer une évolution du signal de mesure émis par le capteur capacitif, et peut en conclure que le liquide qui s'écoule dans le tube est du carburant lorsque cette évolution est incluse dans une première plage d'évolution mémorisée.

Par exemple, le signal de mesure représente la capacité électrique du capteur capacitif. Le calculateur détermine alors la variation de la capacité électrique sur une période donnée et la compare à une plage de variation de capacité électrique,

Selon un autre exemple, le signal de mesure présente une intensité électrique et/ou une tension électrique qui varie en fonction de ladite capacité électrique Le calculateur détermine alors la variation de l'intensité électrique et/ou de la tension électrique du courant électrique à la sortie dudit au moins un capteur capacitif 40 sur une période donnée, et la compare à une plage de variation de référence électrique.

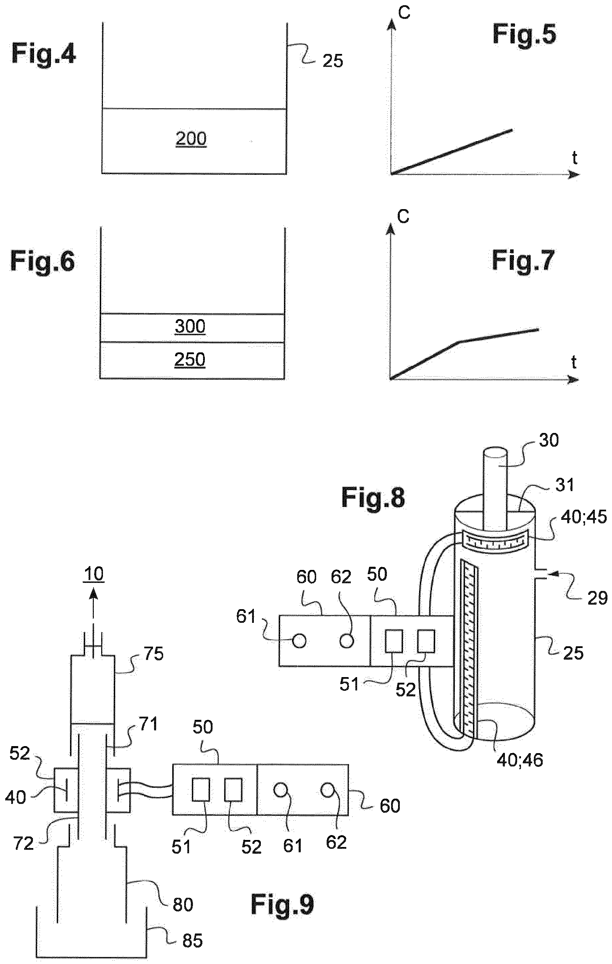

Selon la figure 4, lorsque la valve de purge est ouverte, un liquide 200 coule dans le tube 25. La figure 5 présente un diagramme comprenant la capacité électrique en ordonnée et le temps en abscisse. En référence à la figure 5 si ce liquide est du carburant, la capacité électrique ou l'intensité électrique ou la tension électrique doit alors évoluer en fonction du temps selon une courbe théorique. Par suite, si l'évolution calculée correspond à l'évolution attendue en présence de carburant, alors le liquide est du carburant.

Selon l'exemple de la figure 6, le liquide est dans un premier temps de l'eau 250, puis du carburant 300. La figure 7 présente un diagramme comprenant la capacité électrique en ordonnée et le temps en abscisse qui illustre un changement de pente de la courbe de capacité au moment du changement de la nature du liquide.

Cette variante peut permettre de calculer la hauteur de l'eau dans le tube et la hauteur du carburant dans le tube.

En l'absence d'eau, la capacité électrique mesurée C est égale à la somme suivante :

$$C = h*Ccarburant + (1-h)*Cair$$

avec « h » la hauteur du carburant dans le tube, « Ccarburant » la capacité électrique théorique atteinte quand le tube est rempli de carburant, et « Cair » la capacité électrique théorique atteinte quand le tube est rempli d'air.

Dès lors, la mesure de la capacité électrique C permet d'en déduire la hauteur de carburant.

En présence d'eau, au moment du changement de pente, la capacité électrique mesurée C est égale à la somme suivante :

$$C = heau*Ceau + (1-heau)*Cair$$

avec « heau » la hauteur du carburant dans le tube au moment du changement de pente, « Ceau » la capacité électrique théorique atteinte quand le tube est rempli d'eau, et « Cair » la capacité électrique théorique atteinte quand le tube est rempli d'air.

Dès lors, la mesure de la capacité électrique C permet d'en déduire la hauteur d'eau heau.

Après le changement de pente, la capacité électrique mesurée C est égale à la somme suivante :

$$C = heau*Ceau + hcarb*Ccarburant + (1-heau-hcarburant)*Cair$$

avec « heau » la hauteur du carburant dans le tube au moment du changement de pente, « Ceau » la capacité électrique théorique atteinte quand le tube est rempli d'eau, « hcarb » la hauteur du carburant dans le tube, « Ccarburant » la capacité électrique théorique atteinte quand le tube est rempli de carburant et « Cair » la capacité électrique théorique atteinte quand le tube est rempli d'air.

Dès lors, la mesure de la capacité électrique C permet d'en déduire la hauteur de carburant.

Selon le troisième mode de réalisation de la figure 8, l'outil de purge peut comprendre au moins un capteur capacitif circonférentiel 45 et au moins un capteur capacitif longitudinal 46.

Dès lors, le calculateur détermine la nature du liquide en utilisant uniquement le signal de mesure émis par le capteur capacitif circonférentiel 45.

De plus, le calculateur détermine la nature du liquide en utilisant uniquement le signal de mesure émis par le capteur capacitif longitudinal 46.

Le calculateur estime alors que le liquide est du carburant lorsqu'en même temps le calculateur 50 détermine que le liquide est du carburant en utilisant le signal de mesure émis par le capteur capacitif circonférentiel 45 et en utilisant le signal de mesure émis par le capteur capacitif longitudinal 46.

Selon un autre aspect et en référence à la figure 9, le tube peut être équipé d'un ou plusieurs raccords.

Ainsi, le fond 27 peut comporter un raccord 71 par exemple pour être raccordé à un tuyau débouchant sur un récipient et/ou le sommet 26 peut comporter un raccord 72 par exemple pour être raccordé à un tuyau débouchant sur la valve de purge 10.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention comme définit dans le jeu de revendications.

**Revendications**

1. Outil de purge (20) destiné à extraire l'eau d'un réservoir (1) de carburant (4), ledit outil de purge (20) présentant un tube (25) délimitant un espace interne (INT),
   **caractérisé en ce que** ledit tube (25) comprend au moins un capteur capacitif (40), ledit outil de purge (20) comprenant un calculateur (50) relié au dit au moins un capteur capacitif (40) et à au moins un générateur d'alerte (60), ledit au moins un capteur capacitif (40) étant configuré pour transmettre un signal de mesure au calculateur (50), ledit calculateur (50) étant configuré pour déterminer à l'aide du signal de mesure si un liquide s'écoulant du réservoir (1) vers ledit espace interne (INT) est du carburant, ledit calculateur (50) étant configuré pour transmettre un signal d'alerte au générateur d'alerte (60) au moins quand ledit liquide est du carburant, ledit générateur d'alerte (60) étant configuré pour générer une alerte sur ordre du calculateur (50) quand ledit liquide est du carburant.

**2.** Outil de purge selon la revendication 1,
**caractérisé en ce que** ledit au moins un capteur capacitif (40) inclut un capteur capacitif circonférentiel (45) qui s'étend circonférentiellement soit sur une face (32, 33) du tube (25) soit au sein d'une paroi latérale (31) dudit tube (25).

**3.** Outil de purge selon l'une quelconque des revendications 1 à 2,
**caractérisé en ce que** ledit capteur capacitif circonférentiel (45) s'étend le long d'un arc de cercle.

**4.** Outil de purge selon l'une quelconque des revendications 1 à 3,
**caractérisé en ce que** ledit tube (25) s'étend selon une direction longitudinale (D1) d'un fond (27) vers un sommet (26), ledit au moins un capteur capacitif (40) incluant un capteur capacitif longitudinal (46) qui s'étend parallèlement à la direction longitudinale (D1).

**5.** Outil de purge selon l'une quelconque des revendications 1 à 4,
**caractérisé en ce que** ledit au moins un capteur capacitif (40) inclut au moins deux électrodes de mesure (42, 43) d'un condensateur, les deux électrodes de mesure (42, 43) étant disposées sur une même facette d'un ruban (41).

**6.** Outil de purge selon l'une quelconque des revendications 1 à 5,
**caractérisé en ce que** ledit outil de purge (20) comporte un doigt (30) saillant en dehors d'un sommet (26) du tube (25).

**7.** Outil de purge selon l'une quelconque des revendications 1 à 6,
**caractérisé en ce que** ledit tube (25) comprenant un paroi latérale (31) qui s'étend selon une direction longitudinale (D1) d'un fond (27) vers un sommet (26), ladite paroi latérale comporte une ouverture de mise à l'air (29) qui relie l'espace interne (INT) à un milieu extérieur (EXT) situé à l'extérieur du tube (25).

**8.** Outil de purge selon l'une quelconque des revendications 1 à 7,
**caractérisé en ce que** ledit tube (25) s'étendant selon une direction longitudinale (D1) d'un fond (27) vers un sommet (26), ledit fond (27) est fermé par une paroi de fond (28) qui délimite longitudinalement l'espace interne (INT).

**9.** Outil de purge selon l'une quelconque des revendications 1 à 8,
**caractérisé en ce que** ledit tube (25) s'étendant selon une direction longitudinale (D1) d'un fond (27) vers un sommet (26), ledit fond (27) comporte un raccord (71) ou ledit sommet (26) comporte un raccord (72) ou ledit fond (27) et ledit sommet (26) comportent chacun un raccord (71, 72).

**10.** Procédé pour extraire de l'eau présente dans un réservoir (1) de carburant (4) avec un outil de purge (20) selon l'une quelconque des revendications 1 à 9, ledit réservoir (1) comportant une valve de purge (10),
**caractérisé en ce que** le procédé comporte les étapes suivantes :

• ouverture de la valve de purge (10),
• écoulement dans le tube (25) dudit liquide sortant de la valve de purge (10), le liquide étant d'une nature qui peut être de l'eau ou un mélange d'eau et de carburant ou du carburant,
• détermination que la nature dudit liquide est du carburant avec ledit calculateur (50) en exploitant ledit signal de mesure dudit au moins un capteur capacitif (40),
• génération avec le générateur d'alerte (60) d'une alerte indiquant que ledit liquide est du carburant lorsque ladite étape de détermination indique que ledit liquide est du carburant.

**11.** Procédé selon la revendication 10,
**caractérisé en ce que** le procédé comporte une étape de génération d'une alerte indiquant que ledit liquide n'est pas du carburant lorsqu'une étape de détermination indique que ledit liquide n'est pas du carburant.

**12.** Procédé selon l'un quelconque des revendications 10 à 11,
**caractérisé en ce que** ladite étape de détermination que la nature dudit liquide est du carburant comporte les étapes suivantes :

• mesure d'au moins une intensité électrique ou tension électrique d'un courant transmis par ledit au moins un capteur capacitif (40) au calculateur (50), ladite au moins une intensité électrique ou tension électrique variant en fonction d'une capacité électrique dudit au moins un capteur capacitif (40), ladite capacité électrique variant en fonction de la nature dudit liquide,

• détermination que ladite au moins une intensité électrique ou tension électrique est incluse dans au moins une plage de référence électrique mémorisée pour déterminer que ledit liquide est du carburant ou transformation de ladite au moins une intensité électrique ou tension électrique en une permittivité diélectrique calculée par le calculateur (50) et détermination que ladite permittivité diélectrique calculée est incluse dans au moins une plage de permittivité diélectrique mémorisée pour déterminer que ledit liquide est du carburant.

**13.** Procédé selon l'un quelconque des revendications 10 à 11,
**caractérisé en ce que** ladite étape de détermination que la nature dudit liquide est du carburant comporte les étapes suivantes :

• mesure d'une capacité électrique dudit au moins un capteur capacitif (40), ladite capacité électrique variant en fonction de la nature dudit liquide,
• détermination que ladite capacité électrique est incluse dans au moins une plage de capacité électrique mémorisée pour déterminer que ledit liquide est du carburant ou transformation de ladite capacité électrique en une permittivité diélectrique calculée par le calculateur (50) et détermination que ladite permittivité diélectrique calculée est incluse dans au moins une plage de permittivité diélectrique mémorisée pour déterminer que ledit liquide est du carburant.

**14.** Procédé selon l'un quelconque des revendications 10 à 11,
**caractérisé en ce que** ladite étape de détermination que la nature dudit liquide est du carburant comporte les étapes suivantes :

• détermination par ledit calculateur (50) d'une évolution du signal de mesure émis par ledit au moins un capteur capacitif,
• détermination que le liquide est du carburant lorsque ladite évolution est incluse dans une première plage d'évolution mémorisée.

**15.** Procédé selon la revendication 14,
**caractérisé en ce que** ladite évolution est déterminée par le calculateur (50) :

• soit en déterminant une variation de la capacité électrique dudit au moins un capteur capacitif durant une durée mémorisée, ladite première plage d'évolution mémorisée étant une plage de variation de capacité électrique,
• soit en déterminant une variation de l'intensité électrique ou de la tension électrique d'un courant électrique à une sortie dudit au moins un capteur capacitif (40), ladite première plage d'évolution mémorisée étant une plage de variation de référence électrique.

**16.** Procédé selon l'une quelconque des revendications 10 à 11,
**caractérisé en ce que** ledit au moins un capteur capacitif (40) comprenant un capteur capacitif circonférentiel (45) et un capteur capacitif longitudinal (46), ladite étape de détermination que la nature dudit liquide est du carburant comporte les étapes suivantes :

• détermination que la nature dudit liquide est du carburant par le calculateur (50) avec un signal de mesure émis par le capteur capacitif circonférentiel (45),
• détermination que la nature dudit liquide est du carburant par le calculateur avec un signal de mesure émis par le capteur capacitif longitudinal (46),
• détermination par le calculateur (50) que ledit liquide est du carburant lorsqu'en même temps ledit calculateur (50) détermine que le ledit liquide est du carburant en utilisant le signal de mesure émis par le capteur capacitif circonférentiel (45) et ledit calculateur (50) détermine que ledit liquide est du carburant en utilisant le signal de mesure émis par le capteur capacitif longitudinal (46).

**Patentansprüche**

**1.** Spülwerkzeug (20) zum Entfernen von Wasser aus einem Tank (1) mit Kraftstoff (4), wobei das Spülwerkzeug (20) ein Rohr (25) aufweist, das einen Innenraum (INT) begrenzt,
**dadurch gekennzeichnet, dass** das Rohr (25) wenigstens einen kapazitiven Sensor (40) umfasst, wobei das Spülwerkzeug (20) einen Rechner (50) umfasst, der mit dem wenigstens einen kapazitiven Sensor (40) und mit wenigstens einem Hinweisgenerator (60) verbunden ist, wobei der wenigstens eine kapazitive Sensor (40) konfiguriert ist, um ein Messsignal an den Rechner (50) zu übertragen, wobei der Rechner (50) konfiguriert ist, um unter Verwendung des Messsignals zu bestimmen, ob eine Flüssigkeit, die von dem Tank (1) zu dem Innenraum (INT) fließt, Kraftstoff ist, wobei der Rechner (50) konfiguriert ist, um ein Hinweissignal an den Hinweisgenerator (60) zumindest dann zu senden, wenn die Flüssigkeit Kraftstoff ist, und der Hinweisgenerator (60) konfiguriert ist, um auf Befehl des Rechners (50) einen Hinweis zu erzeugen, wenn die Flüssigkeit Kraftstoff ist.

2. Spülwerkzeug nach Anspruch 1,
**dadurch gekennzeichnet, dass** der mindestens eine kapazitive Sensor (40) einen umfangsseitigen kapazitiven Sensor (45) aufweist, der sich in Umfangsrichtung entweder auf einer Fläche (32, 33) des Rohrs (25) oder innerhalb einer Seitenwand (31) des Rohrs (25) erstreckt.

3. Spülwerkzeug nach einem der Ansprüche 1 bis 2,
**dadurch gekennzeichnet, dass** sich der umfangsseitige kapazitive Sensor (45) entlang eines Kreisbogens erstreckt.

4. Spülwerkzeug nach einem der Ansprüche 1 bis 3,
**dadurch gekennzeichnet, dass** sich das Rohr (25) in einer Längsrichtung (D1) von einem Boden (27) zu einer Spitze (26) erstreckt, wobei der mindestens eine kapazitive Sensor (40) einen längsgerichteten kapazitiven Sensor (46) umfasst, der sich parallel zu der Längsrichtung (D1) erstreckt.

5. Spülwerkzeug nach einem der Ansprüche 1 bis 4,
**dadurch gekennzeichnet, dass** der mindestens eine kapazitive Sensor (40) mindestens zwei Messelektroden (42, 43) eines Kondensators enthält,
wobei die beiden Messelektroden (42, 43) auf der gleichen Seite eines Bandes (41) angeordnet sind.

6. Spülwerkzeug nach einem der Ansprüche 1 bis 5,
**dadurch gekennzeichnet, dass** das Spülwerkzeug (20) einen Finger (30) umfasst, der von einer Spitze (26) des Rohrs (25) vorsteht.

7. Spülwerkzeug nach einem der Ansprüche 1 bis 6,
**dadurch gekennzeichnet, dass** das Rohr (25) eine Seitenwand (31) umfasst, die sich in einer Längsrichtung (D1) von einem Boden (27) zu einer Spitze (26) erstreckt, wobei die Seitenwand eine Entlüftungsöffnung (29) aufweist, die den Innenraum (INT) mit einem außerhalb des Rohrs (25) befindlichen Außenraum (EXT) verbindet.

8. Spülwerkzeug nach einem der Ansprüche 1 bis 7,
**dadurch gekennzeichnet, dass** sich das Rohr (25) in einer Längsrichtung (D1) von einem Boden (27) zu einer Spitze (26) erstreckt, wobei der Boden (27) durch eine Bodenwand (28) verschlossen ist, die den Innenraum (INT) in Längsrichtung begrenzt.

9. Spülwerkzeug nach einem der Ansprüche 1 bis 8,
**dadurch gekennzeichnet, dass** sich das Rohr (25) in einer Längsrichtung (D1) von einem Boden (27) zu einer Spitze (26) erstreckt, wobei der Boden (27) einen Anschluss (71) aufweist oder die Spitze (26) einen Anschluss (72) aufweist oder der Boden (27) und die Spitze (26) jeweils einen Anschluss (71, 72) aufweisen.

10. Verfahren zum Entfernen von Wasser aus einem Tank (1) für Kraftstoff (4) mit einem Spülwerkzeug (20) nach einem der Ansprüche 1 bis 9, wobei der Tank (1) ein Spülventil (10) aufweist,
**dadurch gekennzeichnet, dass** das Verfahren die folgenden Schritte umfasst:

   • Öffnen des Spülventils (10),
   • Fließen der aus dem Spülventil (10) austretenden Flüssigkeit in dem Rohr (25), wobei die Flüssigkeit von der Art sein kann, die Wasser oder eine Mischung aus Wasser und Kraftstoff oder Kraftstoff sein kann,
   • Bestimmen, dass die Art der Flüssigkeit Kraftstoff ist, mit dem Rechner (50) unter Nutzung des Messsignals von dem mindestens einen kapazitiven Sensor (40),
   • Erzeugen eines Hinweises mit dem Hinweisgenerator (60), der anzeigt, dass die Flüssigkeit Kraftstoff ist, wenn der Schritt des Bestimmens anzeigt, dass die Flüssigkeit Kraftstoff ist.

11. Verfahren nach Anspruch 10,

**dadurch gekennzeichnet, dass** das Verfahren einen Schritt des Erzeugens eines Hinweises umfasst, der anzeigt, dass die Flüssigkeit kein Kraftstoff ist, wenn ein Schritt des Bestimmens anzeigt, dass die Flüssigkeit kein Kraftstoff ist.

**12.** Verfahren nach einem der Ansprüche 10 bis 11,
**dadurch gekennzeichnet, dass** der Schritt des Bestimmens, dass die Art der Flüssigkeit Kraftstoff ist, die folgenden Schritte umfasst:

Messen mindestens einer elektrischen Stromstärke oder einer elektrischen Spannung eines von dem mindestens einen kapazitiven Sensor (40) an den Rechner (50) übertragenen Stroms, wobei die mindestens eine elektrische Stromstärke oder die mindestens eine elektrische Spannung in Abhängigkeit von einer elektrischen Kapazität des mindestens einen kapazitiven Sensors (40) variiert, wobei die elektrische Kapazität in Abhängigkeit von der Art der Flüssigkeit variiert,
Bestimmen, dass die mindestens eine elektrische Stromstärke oder Spannung innerhalb mindestens eines gespeicherten elektrischen Referenzbereichs liegt, um zu bestimmen, dass die Flüssigkeit Kraftstoff ist, oder Umwandeln der mindestens einen elektrischen Stromstärke oder Spannung in eine vom Rechner (50) berechnete dielektrische Permittivität und Bestimmen, dass die berechnete dielektrische Permittivität innerhalb mindestens eines gespeicherten dielektrischen Permittivitätsbereichs liegt, um zu bestimmen, dass die Flüssigkeit Kraftstoff ist.

**13.** Verfahren nach einem der Ansprüche 10 bis 11,
**dadurch gekennzeichnet, dass** der Schritt des Bestimmens, dass die Art der Flüssigkeit Kraftstoff ist, die folgenden Schritte umfasst:

Messen einer elektrischen Kapazität des mindestens einen kapazitiven Sensors (40), wobei die elektrische Kapazität in Abhängigkeit von der Art der Flüssigkeit variiert,
Bestimmen, dass die elektrische Kapazität innerhalb mindestens eines gespeicherten elektrischen Kapazitätsbereichs liegt, um zu bestimmen, dass die Flüssigkeit Brennstoff ist, oder Umwandeln der elektrischen Kapazität in eine vom Rechner (50) berechnete dielektrische Permittivität und Bestimmen, dass die berechnete dielektrische Permittivität innerhalb mindestens eines gespeicherten dielektrischen Permittivitätsbereichs liegt, um zu bestimmen, dass die Flüssigkeit Kraftstoff ist.

**14.** Verfahren nach einem der Ansprüche 10 bis 11,
**dadurch gekennzeichnet, dass** der Schritt des Bestimmens, dass die Art der Flüssigkeit Kraftstoff ist, die folgenden Schritte umfasst:

Bestimmen einer Entwicklung des von dem mindestens einen kapazitiven Sensor abgegebenen Messsignals durch den Rechner (50),
Bestimmen, dass es sich bei der Flüssigkeit um Kraftstoff handelt, wenn diese Entwicklung innerhalb eines ersten gespeicherten Entwicklungsbereichs liegt.

**15.** Verfahren nach Anspruch 14,
**dadurch gekennzeichnet, dass** diese Entwicklung durch den Rechner (50) bestimmt wird:

• durch Bestimmen einer Schwankung in der elektrischen Kapazität des mindestens einen kapazitiven Sensors während einer gespeicherten Zeitspanne, wobei der erste gespeicherte Entwicklungsbereich ein Schwankungsbereich der elektrischen Kapazität ist, oder
• durch Bestimmen einer Schwankung der elektrischen Stromstärke oder der elektrischen Spannung eines elektrischen Stroms an einem Ausgang des mindestens einen kapazitiven Sensors (40), wobei der erste gespeicherte Schwankungsbereich ein elektrischer Referenzschwankungsbereich ist.

**16.** Verfahren nach einem der Ansprüche 10 bis 11,
**dadurch gekennzeichnet, dass** der mindestens eine kapazitive Sensor (40) einen umfangsseitigen kapazitiven Sensor (45) und einen längsgerichteten kapazitiven Sensor (46) umfasst, wobei der Schritt des Bestimmens, dass die Art der Flüssigkeit Kraftstoff ist, die folgenden Schritte umfasst:

• Bestimmen, dass die Art der Flüssigkeit Kraftstoff ist, durch den Rechner (50) mit einem von dem umfangsseitigen kapazitiven Sensor (45) abgegebenen Messsignal,
• Bestimmen, dass die Art der Flüssigkeit Kraftstoff ist, durch den Rechner mit einem vom längsgerichteten kapazitiven Sensor (46) abgegebenen Messsignal,
• Bestimmen, dass die Flüssigkeit Kraftstoff ist, durch den Rechner (50), wenn gleichzeitig der Rechner (50) unter Verwendung des von dem umfangsseitigen kapazitiven Sensor (45) abgegebenen Messsignals bestimmt, dass die Flüssigkeit Kraftstoff ist, und der Rechner (50) unter Verwendung des von dem längsgerichteten kapazitiven Sensor (46) abgegebenen Messsignals bestimmt, dass die Flüssigkeit Kraftstoff ist.

**Claims**

1.  Purge tool (20) for extracting water from a tank (1) of fuel (4), said purge tool (20) having a tube (25) that delimits an internal space (INT),
    **characterised in that** said tube (25) comprises at least one capacitive sensor (40), said purge tool (20) comprising a computer (50) that is connected to said at least one capacitive sensor (40) and to at least one alert generator (60), said at least one capacitive sensor (40) being configured to transmit a measurement signal to the computer (50), said computer (50) being configured to determine, using the measurement signal, whether a liquid that is flowing from the tank (1) to said internal space (INT) is fuel, said computer (50) being configured to transmit an alert signal to the alert generator (60) at least when said liquid is fuel, said alert generator (60) being configured to generate an alert at the command of the computer (50) when said liquid is fuel.

2.  Purge tool according to claim 1,
    **characterised in that** said at least one capacitive sensor (40) includes a circumferential capacitive sensor (45) which extends circumferentially either on one face (32, 33) of the tube (25) or within a side wall (31) of said tube (25).

3.  Purge tool according to either claim 1 or claim 2,
    **characterised in that** said circumferential capacitive sensor (45) extends along an arc of a circle.

4.  Purge tool according to any of claims 1 to 3,
    **characterised in that** said tube (25) extends in a longitudinal direction (D1) from a bottom (27) to a top (26), said at least one capacitive sensor (40) including a longitudinal capacitive sensor (46) which extends parallel to the longitudinal direction (D1).

5.  Purge tool according to any of claims 1 to 4,
    **characterised in that** said at least one capacitive sensor (40) includes at least two measurement electrodes (42, 43) of a capacitor, the two measurement electrodes (42, 43) being arranged on the same side of a tape (41).

6.  Purge tool according to any of claims 1 to 5,
    **characterised in that** said purge tool (20) comprises a finger (30) that projects beyond a top (26) of the tube (25).

7.  Purge tool according to any of claims 1 to 6,
    **characterised in that**, said tube (25) comprising a side wall (31) which extends in a longitudinal direction (D1) from a bottom (27) to a top (26), said side wall comprises a vent opening (29) which connects the internal space (INT) to an external environment (EXT) located outside the tube (25).

8.  Purge tool according to any of claims 1 to 7,
    **characterised in that**, said tube (25) extending in a longitudinal direction (D1) from a bottom (27) to a top (26), said bottom (27) is closed by a bottom wall (28) that longitudinally delimits the internal space (INT).

9.  Purge tool according to any of claims 1 to 8,
    **characterised in that**, said tube (25) extending in a longitudinal direction (D1) from a bottom (27) to a top (26), said bottom (27) comprises a connector (71) or said top (26) comprises a connector (72) or said bottom (27) and said top (26) each comprise a connector (71, 72).

10. Method for extracting water that is present in a tank (1) of fuel (4) by means of a purge tool (20) according to any of claims 1 to 9, said tank (1) comprising a purge valve (10), **characterised in that** said method comprises the following steps:

    • opening the purge valve (10);
    • allowing said liquid escaping the purge valve (10) to flow into the tube (25), the liquid being of a nature which can be water, or a mixture of water and fuel, or fuel;
• determining that the nature of said liquid is fuel by means of said computer (50) by using said measurement signal from said at least one capacitive sensor (40);
• generating, by means of the alert generator (60), an alert indicating that said liquid is fuel when said determining step indicates that said liquid is fuel.

11. Method according to claim 10,
**characterised in that** the method comprises a step of generating an alert indicating that said liquid is not fuel when a determining step indicates that said liquid is not fuel.

12. Method according to either claim 10 or claim 11,
**characterised in that** said step of determining that the nature of said liquid is fuel comprises the following steps:

• measuring at least one electrical intensity or electrical voltage of a current transmitted by said at least one capacitive sensor (40) to the computer (50), said at least one electrical intensity or electrical voltage varying depending on an electrical capacity of said at least one capacitive sensor (40), said electrical capacity varying depending on the nature of said liquid;
• determining that said at least one electrical intensity or electrical voltage is included in at least one stored electrical reference range in order to determine that said liquid is fuel, or transforming said at least one electrical intensity or electrical voltage into a dielectric permittivity that is calculated by the computer (50) and determining that said calculated dielectric permittivity is included in at least one stored dielectric permittivity range in order to determine that said liquid is fuel.

13. Method according to either claim 10 or claim 11,
**characterised in that** said step of determining that the nature of said liquid is fuel comprises the following steps:

• measuring an electrical capacity of said at least one capacitive sensor (40), said electrical capacity varying depending on the nature of said liquid;
• determining that said electrical capacity is included in at least one stored electrical capacity range in order to determine that said liquid is fuel, or transforming said electrical capacity into a dielectric permittivity that is calculated by the computer (50) and determining that said calculated dielectric permittivity is included in at least one stored dielectric permittivity range in order to determine that said liquid is fuel.

14. Method according to either claim 10 or claim 11,
**characterised in that** said step of determining that the nature of said liquid is fuel comprises the following steps:

• determining, by means of said computer (50), a change in the measurement signal transmitted by said at least one capacitive sensor;
• determining that the liquid is fuel when said change is included in a first stored change range.

15. Method according to claim 14,
**characterised in that** said change is determined by the computer (50), either:

• by determining a variation in the electrical capacity of said at least one capacitive sensor during a stored duration, said first stored change range being an electrical capacity variation range; or
• by determining a variation in the electrical intensity or the electrical voltage of an electrical current at an output of said at least one capacitive sensor (40), said first stored change range being an electrical reference variation range.

16. Method according to either claim 10 or claim 11,
**characterised in that**, said at least one capacitive sensor (40) comprising a circumferential capacitive sensor (45) and a longitudinal capacitive sensor (46), said step of determining that the nature of said liquid is fuel comprises the following steps:

• determining that the nature of said liquid is fuel by means of the computer (50) using a measurement signal transmitted by the circumferential capacitive sensor (45);
• determining that the nature of said liquid is fuel by means of the computer using a measurement signal transmitted by the longitudinal capacitive sensor (46);

• determining, by means of the computer (50), that said liquid is fuel when said computer (50) simultaneously determines that said liquid is fuel by using the measurement signal transmitted by the circumferential capacitive sensor (45) and said computer (50) determines that said liquid is fuel using the measurement signal transmitted by the longitudinal capacitive sensor (46).

**Fig.1**

4

5

11

10

2

3

1

60

50

62

N Y
○ ○

61   51   52

45;40

26

33

31

32

26

29

34

25

EXT

INT

20

AX

30

D1

27

28

**Fig.2**

42

44

40

43

41

**Fig.3**

30

34

60

50

29

25

61   62   51   52

40;46

**Fig.4**

200

25

**Fig.5**

C

t

**Fig.6**

300

250

**Fig.7**

C

t

**Fig.8**

30

31

40;45

29

25

40;46

60 62 50

61

51 52

**Fig.9**

10

75

71

52

40

72

80

85

50

51 52 61 62

60

**EP 3 498 613 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2929704
- US 7377151 B
- US 2012210769 A
- US 2011084842 A
- WO 2013056626 A
- FR 2800872
- WO 2008110838 A